# NEUE EUROPÄISCHE PATENTSCHRIFT

(11) **EP 3 053 428 B2**
(45) Veröffentlichungstag und Bekanntmachung des Hinweises auf die Entscheidung über den Einspruch: **18.11.2020**
(45) Hinweis auf die Patenterteilung: 23.08.2017
(21) Anmeldenummer: 16150377.6
(22) Anmeldetag: 07.01.2016
(51) Int. Cl.: A01D 43/073

(54) **SYSTEM ZUR ERMITTLUNG DES BEFÜLLGEWICHTS EINES FAHRBAREN SAMMELBEHÄLTERS**
SYSTEM FOR DETERMINING THE FILL WEIGHT OF A MOVABLE COLLECTING CONTAINER
SYSTEME DE DETERMINATION DU POIDS DE REMPLISSAGE D'UN CONTAINER DE COLLECTE MOBILE

(30) Priorität: 05.02.2015 DE 102015101662
(43) Veröffentlichungstag der Anmeldung: 10.08.2016
(73) Patentinhaber: CLAAS Selbstfahrende Erntemaschinen GmbH, 33428 Harsewinkel (DE)
(72) Erfinder: POLLKLAS, Manfred, 33378 Rheda-Wiedenbrück (DE)
(74) Vertreter: CLAAS Gruppe

(56) Entgegenhaltungen:
- EP-A1- 1 400 161
- EP-A1- 1 714 542
- EP-A1- 2 526 752
- EP-A2- 2 044 826
- EP-A2- 2 829 171
- DE-A1- 10 064 862
- DE-A1-102008 002 006
- DE-A1-102009 027 245
- DE-A1-102010 043 854
- DE-A1-102011 082 052
- DE-C2- 3 726 930
- G. HAPPICH et al.: "Schüttkegel- und Beladungsmodelle für das automatische Überladen", Landtechnik, vol. 4, 28 September 2009 (2009-09-28), pages 264-267,

## Beschreibung

Die Erfindung betrifft ein System zur Ermittlung des Befüllgewichts eines fahrbaren Sammelbehälters, der zur Aufnahme eines landwirtschaftlichen Erntegutes dient und von einer Erntemaschine mittels einer Überladeeinrichtung befüllt wird.

Weiterhin betrifft die Erfindung auch ein Verfahren zur Ermittlung des Befüllgewichts eines fahrbaren Sammelbehälters, der zur Aufnahme eines landwirtschaftlichen Erntegutes dient und mittels einer Überladeeinrichtung von einem selbstfahrenden Feldhäcksler befüllt wird.

Landwirtschaftliche Erntemaschinen, die aufgrund der technischen Entwicklung für viele Anwendungen als Vollernter ausgebildet sind, stehen in der Landwirtschaft als Vorrichtungen für eine Vielzahl unterschiedlicher Ernteverfahren zur Verfügung. Der Begriff landwirtschaftliche Erntemaschinen soll in diesem Zusammenhang neben Maschinen für die Ernte von Getreide, Raps, Mais oder Halmgut auch solche mit einbeziehen, die in der Ernte von Hackfrüchten oder Kartoffeln eingesetzt werden. Bei den Erntemaschinen erfolgt stets eine Aufnahme des Erntegutes durch einen entsprechenden Erntevorsatz, an den sich in der Regel Förderelemente anschließen, die das aufgenommene Erntegut in zumindest eine Vorrichtung zu dessen Aufbereitung fördern. Ein System gemäß dem Oberbegriff des Anspruchs 1 ist aus EP 2 829 171 bekannt. Unter Aufbereitung ist in diesem Zusammenhang sowohl eine Veränderung des Zustandes des Erntegutes als auch eine Trennung des über den Erntevorsatz aufgenommenen Erntegutes von bestimmten Bestandteilen und Verunreinigungen zu betrachten. Nachdem diese Aufbereitung erfolgt ist, wird der für eine Weiterverarbeitung bzw. für den Handel bestimmte Teil des Erntegutes über eine Überladeeinrichtung an einen fahrbaren Sammelbehälter, der, gezogen von einem Traktor, parallel zur Erntemaschine fährt, weitergegeben.

Ein Beispiel für eine derartige landwirtschaftliche Erntemaschine ist ein selbstfahrender Feldhäcksler, bei dem ein Halmgut oder Mais über einen Erntevorsatz aufgenommen und über Einzugswalzen eingezogen, dann Arbeitsaggregaten zugeführt wird, die Vorpresswalzen und ein Häckselaggregat umfassen, und schließlich über ein Gebläse und einen als Überladeeinrichtung dienenden Auswurfkrümmer einem Sammelbehälter zugeführt wird.

Bei einer als Mähdrescher ausgebildeten landwirtschaftlichen Erntemaschine erfolgt die Aufnahme des Erntegutes ebenfalls über einen Erntevorsatz, von dem aus das Erntegut über einen Schrägförderer einer als Dreschwerk und Trenneinrichtungen ausgebildeten Aufbereitungseinrichtung zugeführt wird. Geerntete Getreidekörner, Rapsfrüchte oder Maiskörner, die letztendlich das Erntegut bilden, gelangen aus dieser Aufbereitungseinrichtung in einen Korntank, während das Stroh, Maisstengel und andere für die Ernte nicht vorgesehenen Bestandteile auf dem Feld abgelegt werden. Zur Entleerung des Korntanks ist eine Förderschnecke vorgesehen, die als Überladeeinrichtung dient und das gespeicherte Erntegut in einen bereit gestellten oder parallel fahrenden Sammelbehälter fördert.

Die fahrbaren Sammelbehälter, die auch als Überladefahrzeuge bezeichnet werden, bestehen aus einem auf einer Doppelachse angeordneten Fahrwerkrahmen, auf dem zumeist ein kippbarer Ladecontainer vorgesehen ist. Aufgrund des Fassungsvermögens des Ladecontainers und der jeweiligen Art beziehungsweise des Zustandes des Erntegutes tritt häufig das Problem auf, dass nach Beendigung des innerhalb eines Erntezyklus durchgeführten Überladevorgangs das zulässige Gesamtgewicht des fahrbaren Sammelbehälters und/oder die zulässige Last an einer Anhängekupplung des Traktors überschritten werden. Gemäß der Rechtsprechung ist nicht nur der Fahrer des Traktors, der den Sammelbehälter im Straßenverkehr zieht, sondern auch der Belader des Sammelbehälters, also der Fahrer der Erntemaschine, für eine ordnungsgemäße Beladung desselben verantwortlich.

Eine System der im Oberbegriff des Patentanspruchs 1 angegebenen Gattung ist aus der DE 100 64 862 A1 bekannt. Es handelt sich bei der Erntemaschine wahlweise um einen selbstfahrenden Feldhäcksler oder einen selbstfahrenden Mähdrescher. Von der Erntemaschine aus wird das Erntegut durch eine Überladeeinrichtung einem von einem Traktor gezogenen Sammelbehälter zugeführt. Dabei ist ein Navigationssystem vorgesehen, mit welchem die Positionen der einzelnen Überladefahrzeuge und der Erntemaschine ermittelt und über eine Datenübertragungsstrecke auf eine Speichereinrichtung der Erntemaschine übertragen werden. Unter anderem ist auch vorgesehen, fahrzeugspezifische Größen des den Sammelbehälter aufnehmenden Überladefahrzeugs durch schon auf dem Fahrzeug vorhanden Mittel, wie Sensoren und Messeinrichtungen zu erfassen. Dadurch soll ermöglicht werden, die Beladung des Sammelbehälters nur bis an die zulässige Zuladung durchzuführen.

Weiterhin ist aus der WO 03/039239 A1 ein selbstfahrender Feldhäcksler bekannt, bei dem durch einen Mikroprozessor ein Durchsatz des Erntegutes ermittelt wird. Dabei weisen die Einzugswalzen einen hydrostatischen Antrieb auf, dessen Druckleitung ein Drucksensor zugeordnet ist. Außerdem wird mittels eines im Antriebsstrang vorgesehenen Drehzahlsensors die Einzugsgeschwindigkeit der Einzugswalzen ermittelt. Der Mikroprozessor errechnet aufgrund dieser Parameter den Durchsatz des Erntegutes, der Aufschluss über Erntegutmengen und Ertragsverteilungen innerhalb der Schläge geben soll. Diese Daten sollen Ausgangspunkt für eine gezielte Ursachenforschung problematischer Schläge sein und eine Entscheidungshilfe bei der Flächenstilllegung darstellen.

Es ist Aufgabe der vorliegenden Erfindung, ein System und ein Verfahren bereitzustellen, mittels welchen eine zuverlässige Ermittlung der Zuladung des Sammelbehälters ermöglicht wird und diese Information dem Fahrer der Erntemaschine fortlaufend zur Verfügung gestellt wird.

Diese Aufgabe wird, ausgehend vom jeweiligen Oberbegriff des Patentanspruchs 1 und des Patentanspruchs 9, in Verbindung mit den kennzeichnenden Merkmalen dieser Patentansprüche gelöst. Die vom Patentanspruch 1 abhängigen Patentansprüche beinhalten erfindungsgemäße Weiterbildungen dieser Lösung.

Danach soll das System zumindest eine an der Erntemaschine und/oder an deren Überladeeinrichtung angeordnete Durchsatzmesseinrichtung und eine Steuerungseinrichtung umfassen, wobei fortlaufend Istwerte des Erntegutdurchsatzes der Steuerungseinrichtung zugeführt werden, wobei zu Beginn eines Erntezyklus oder Überladezyklus bei leerem Sammelbehälter spezifische Daten des Sammelbehälters an die Steuerungseinrichtung übertragen werden und wobei im Erntezyklus oder Überladezyklus mittels der Steuerungseinrichtung aufgrund des Erntegutdurchsatzes das aktuelle Befüllgewicht des Sammelbehälters ermittelbar ist. Mit dem Erntezyklus ist ein laufendes Überladen von der Erntemaschine in den Sammelbehälter gemeint, das heißt der Sammelbehälter wird parallel zu oder hinter der Erntemaschine gefahren, und das Erntegut wird über ein Förderband oder einen Auswurfkrümmer in diesen gefördert. In diesem Fall kann der Erntegutdurchsatz durch die Erntemaschine oder die Überladeeinrichtung ermittelt werden. Bei anderen Erntemaschinen, wie zum Beispiel Mähdreschern kann bei stehender oder bewegter Erntemaschine auf den Sammelbehälter überladen werden. In diesem Fall ist innerhalb der Überladeeinrichtung, die beim Mähdrescher durch eine Förderschnecke oder ein Förderband für die Korntankentleerung gebildet ist, eine Durchsatzmesseinrichtung angeordnet. Die Steuerungseinrichtung umfasst zumindest eine Central Processing Unit (CPU) sowie zumindest ein Speichermodul zur Hinterlegung und Abarbeitung von ausführbaren Algorithmen und zur Speicherung von Daten.

Zu Beginn des Erntezyklus' oder Überladezyklus' werden der Steuerungseinrichtung den Sammelbehälter betreffende Daten, insbesondere dessen Leergewicht und dessen zulässiges Gesamtgewicht, und die Information, dass der Sammelbehälter leer ist, zur Verfügung gestellt. Daraufhin wird während des Erntezyklus das Erntegut auf den die Erntemaschine begleitenden Sammelbehälter gefördert, bis ein maximal zulässiges oder ein voreingestelltes Befüllgewicht des Sammelbehälters erreicht ist. Dieses Befüllgewicht ermittelt die Steuerungseinrichtung mittels zumindest einer Durchsatzmesseinrichtung, die den Einzugselementen oder einer Erntegutaufbereitung der Erntemaschine zugeordnet sein kann. Die Steuerungseinrichtung wirkt dabei mit einem in der Fahrerkabine der Erntemaschine angeordneten Display zusammen, welches den Fahrer fortlaufend darüber informiert, wie der aktuelle Beladungszustand des Sammelbehälters ist. Diese Informationen werden von der Steuerungseinrichtung bereitgestellt.

Handelt es sich bei der Erntemaschine beispielsweise um einen Mähdrescher, so wird der Sammelbehälter ebenfalls zunächst von der Steuerungseinrichtung erfasst und datenmäßig registriert. Die jeweilige auf einen Sammelbehälter überladene Erntegutmenge kann in diesem Fall während jedes Überladevorgangs an der als Förderschnecke oder als Förderband ausgeführten Überladeeinrichtung mittels der Durchsatzmesseinrichtung bestimmt werden. Dabei erfasst die Steuerungseinrichtung von jedem angefahrenen Sammelbehälter die bis zu diesem Zeitpunkt überladene Erntegutmenge und addiert die aktuelle Durchsatzmenge an der Überladeeinrichtung hinzu. Somit kann an jedem auf dem Feld positionierten Sammelbehälter von dem Fahrer der Erntemaschine das Befüllgewicht kontrolliert werden.

Demgegenüber sollen nach der Druckschrift DE 100 64 862 A1 offenbar an den Transportbehältern Mittel vorgesehen sein, die dessen zulässige Zuladung genauso wie die Position des Transportbehälters erfassen und mittels der Datenübertragungsstrecke auf die Erntemaschine übertragen. Aus der WO 03/039239 A1 geht zwar eine Durchsatzmesseinrichtung einer Erntemaschine hervor; der jeweils ermittelte Erntedurchsatz soll aber Aufschluss darüber geben, wie die Ertragsverteilung auf einem Feld ist. Daraus sollen mittels Auswertungs- und Analyseprogrammen Ertragskarten erstellt werden.

Wie bereits dargelegt, kann die Erntemaschine als selbstfahrender Feldhäcksler ausgebildet sein, welcher einen Gutstrom des Erntegutes über einen als Überladeeinrichtung dienenden Auswurfkrümmer auf den fahrbaren Sammelbehälter fördert. Der Feldhäcksler weist einen Erntevorsatz auf, der das Halmgut aufnimmt und Einzugswalzen zuleitet. Diesen sind Vorpresswalzen nachgeschaltet, die für eine weitere Verdichtung des Erntegutstromes sorgen. In Förderrichtung des Erntegutes befindet sich hinter den Vorpresswalzen eine mit Häckselmessern versehene Häckseltrommel, die mit feststehenden Gegenschneiden zusammenwirkt. Das gehäckselte Erntegut kann anschließend über Gutbleche und einen Häckselboden einer Nachzerkleinerungseinrichtung zuführt werden, die dazu dient, bei der Ernte von Silomais oder Mais für eine Biogasanlage die Maiskörner derart zu beschädigen, dass diese mit in den anschließenden Gärungsprozess einbezogen werden.

Erfindungsgemäß soll die Durchsatzmesseinrichtung an Einzugswalzen oder an diesen in Strömungsrichtung des Erntegutstromes nachgeordneten Vorpresswalzen, die jeweils paarweise gegenläufig angetrieben werden, angeordnet sein. Dabei soll die Durchsatzmesseinrichtung einen Sensor aufweisen, mit welchem die durch den Erntegutstrom bewirkte Auslenkung zumindest einer der Walzen oder die an zumindest einer der Walzen auftretenden Kräfte ermittelt werden, und dass über die Durchsatzmesseinrichtung die Drehzahl der Einzugswalzen und/oder Vorpresswalzen erfasst wird. Aufgrund dieser Parameter lässt sich fortlaufend die Erntegutmenge bestimmen, woraus mittels der Steuerungseinrichtung das entsprechende Gewicht dieser Erntegutmenge bestimmt wird. Alternativ dazu kann die Durchsatzmessung auch an der Nachzerkleinerungseinrichtung vorgenommen werden. Außerdem können Sensoren vorgesehen sein, über die der Feuchtegrad des Erntegutes, der dessen Gewicht beeinflusst, ermittelt wird und dieser Wert ebenfalls der Steuerungseinrichtung zugeleitet wird. Weiterhin ist vorgesehen, dass die Steuerungseinrichtung eine Eingabeeinrichtung zur manuellen Eingabe der Art des Erntegutes aufweist.

Außerdem soll die Steuerungseinrichtung mit einer an der Erntemaschine angeordneten Kamera verbunden sein, über die selbsttätig ein Wechsel des fahrbaren Sammelbehälters sowie das erlaubte Befüllgewicht des Sammelbehälters ermittelbar ist. Weiterhin ist der jeweilige Sammelbehälter mit einem Barcode oder 2D-Code versehen sein, anhand dessen der Typ des Sammelbehälters sowie dessen Befüllgewicht erkennbar sind, wobei die Erfassung dieser Daten mittels eines an der Erntemaschine angeordneten Lesegeräts erfolgen kann.

Schließlich ist ein Verfahren zur Ermittlung des Befüllgewichts eines fahrbaren Sammelbehälters vorgesehen, wobei dieser Sammelbehälter, auch Transportbehälter genannt, zur Aufnahme eines landwirtschaftlichen Erntegutes dient und mittels einer Überladeeinrichtung von einem selbstfahrenden Feldhäcksler befüllt wird. Im Rahmen dieses Verfahrens soll zunächst vom Fahrer des Feldhäckslers über eine Bedieneinheit in eine Steuerungseinrichtung die Art des Erntegutes eingegeben werden. Dann werden zu Beginn eines Erntezyklus ein Behälterwechsel und das zulässige Befüllgewicht des Sammelbehälters ermittelt. Anschließend wird während des der Befüllung des Sammelbehälters dienenden Erntezyklus über eine an Einzugswalzen und/oder Vorpresswalzen angeordnete Messeinrichtung ein Erntegutdurchsatz des Feldhäckslers ermittelt, die fortlaufend als Istwerte des Erntegutdurchsatzes der Steuerungseinrichtung zugeführt werden. Die Steuerungseinrichtung ermittelt aufgrund des Erntegutdurchsatzes das aktuelle Befüllgewicht des Sammelbehälters und zeigt dieses mittels eines Displays dem Fahrer des Feldhäckslers an. Der Fahrer wird beim Überschreiten eines oberen Grenzwertes des Befüllgewichts den Überladevorgang unterbrechen und einen neuen Sammelbehälter anfordern.

Vorzugsweise können nach einem Abschluss des Überladevorganges oder Erreichens des oberen Grenzwertes des Befüllgewichtes die während des Erntezyklus' zugeführten Istwerte des Erntegutdurchsatzes auf einen Initialwert zurückgesetzt werden. Hierzu können die Istwerte auf einen Wert Null zurückgesetzt werden, so dass mit der Aufnahme eines erneuten Überladevorganges in Abhängigkeit von den Befülleigenschaften des detektierten Sammelbehälters beziehungsweise der Vorgabe des erlaubten Befüllgewichtes das Verfahren erneut ausgeführt werden kann.

Die Erfindung ist nicht auf die angegeben Kombination der Merkmale des Patentanspruchs 1 und der abhängigen Patentansprüche sowie auf die Merkmale des Verfahrensanspruchs 9 beschränkt. Es ergeben sich darüber hinaus Möglichkeiten, einzelne Merkmale, auch soweit sie aus den Patentansprüchen, den Vorteilsangaben zu den Patentansprüchen, der nachfolgenden Beschreibung der Ausführungsbeispiele oder zumindest aus der Zeichnung hervorgehen, miteinander zu kombinieren. Die Bezugnahme der Patentansprüche auf die Zeichnung durch die Verwendung von Bezugszeichen soll den Schutzumfang der Patentansprüche nicht beschränken.

Zur weiteren Erläuterung der Erfindung wird auf die Zeichnung verwiesen, in der ein Ausführungsbeispiel vereinfacht dargestellt ist. Es zeigen:
- Figur 1: eine Seitenansicht einer als selbstfahrender Feldhäcksler ausgebildeten Erntemaschine ohne Erntevorsatz,
- Figur 2: eine schematische Darstellung eines selbstfahrenden Feldhäckslers mit einem Teilschnitt im Bereich eines Erntevorsatzes sowie einer Einrichtung zur Aufbereitung des Erntegutes und
- Figur 3: den selbstfahrenden Feldhäcksler während eines Erntevorganges, bei dem das Erntegut mittels einer als Auswurfkrümmer ausgebildeten Überladeeinrichtung auf einen parallel zum Feldhäcksler fahrenden Sammelbehälter gefördert wird.

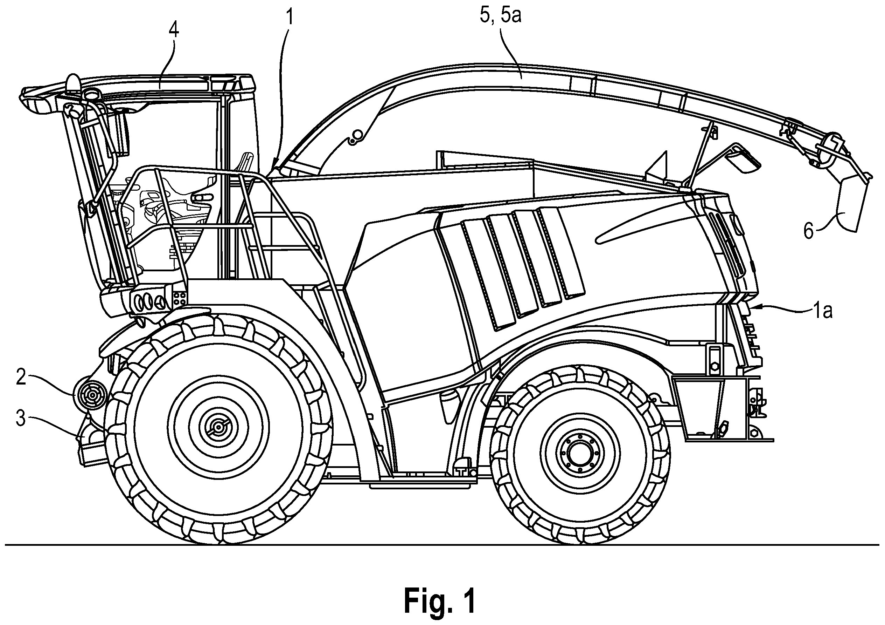

In der Figur 1 ist mit 1 eine Erntemaschine bezeichnet, die als selbstfahrender Feldhäcksler 1a ausgebildet ist. Der selbstfahrende Feldhäcksler 1a ist in seinem frontseitigen Bereich derart gestaltet, dass er einen in dieser Figur 1 nicht dargestellten Erntevorsatz aufnehmen kann. Da dieser Erntevorsatz entfernt ist, sind Einzugswalzen 2 und 3 sichtbar, über die das vom Erntevorsatz aufgenommene Erntegut verdichtet und in das Innere des Feldhäckslers 1a gefördert wird. Weiterhin weist der selbstfahrende Feldhäcksler 1 eine Fahrerkabine 4 und einen als Überladeeinrichtung 5 dienenden verschwenkbaren Auswurfkrümmer 5a auf. Die Verschwenkung des Auswurfkrümmers 5a erfolgt, um das Erntegut gezielt einem nicht näher dargestellten Sammelfahrzeug, das parallel aber versetzt zum Feldhäcksler 1 a fährt, zuzuführen. Am Ende des Auswurfkrümmers 5a befindet sich eine Auswurfklappe 6, die um eine horizontale Achse verschwenkbar ist.

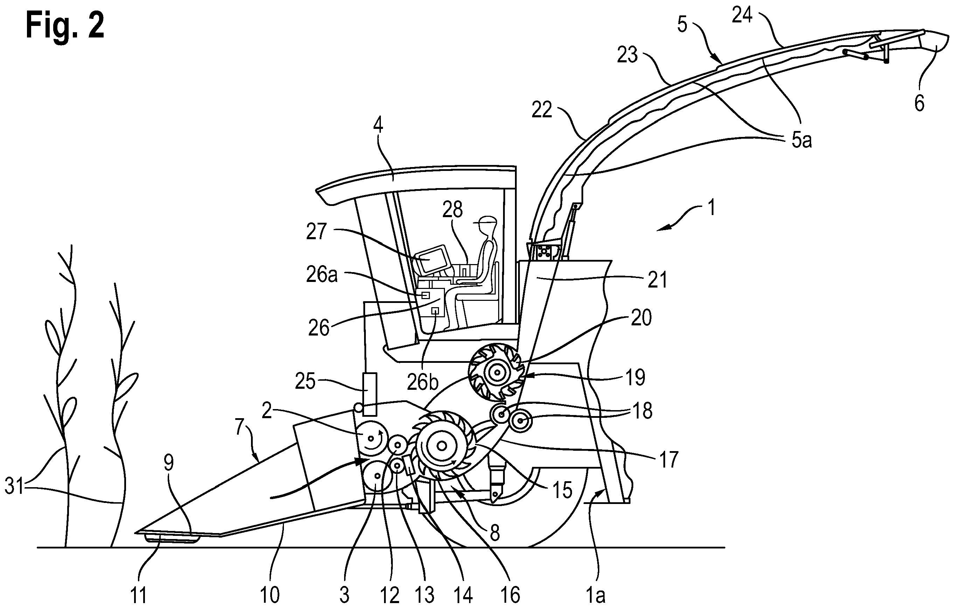

Zur weiteren Erläuterung der Ausbildung des in Figur 1 dargestellten selbstfahrenden Feldhäckslers 1 a wird auf die Figur 2 verwiesen, in der ein entsprechender Feldhäcksler 1a schematisch und zum Teil im Schnitt dargestellt ist. In diesem Fall ist der Feldhäcksler 1a im Gegensatz zu der Figur 1 mit einem Erntevorsatz 7 verbunden. Weiterhin weist der Feldhäcksler 1 a eine Vorrichtung 8 zur Aufbereitung des Erntegutes sowie den Auswurfkrümmer 5 und die Fahrerkabine 4 auf. Die Fahrerkabine 4 ist oberhalb des Erntevorsatzes 7 beziehungsweise der Vorrichtung 8 zur Aufbereitung des Erntegutes angeordnet.

Der Erntevorsatz 7 ist mit einem Bodenblech 9 und einem schräg verlaufenden Gutleitblech 10 versehen, wobei diese Bauelemente 9 und 10 den Erntevorsatz 7 in Richtung des überfahrenden Bodens begrenzen und das Erntegut in Richtung der Aufbereitungseinrichtung 8 führen. Außerdem ist der Erntevorsatz 7 mit mehreren Kufen 11 versehen, über die der Erntevorsatz 7 auf dem überfahrenden Boden gleitet. An den Erntevorsatz 7 schließen sich die Einzugswalzen 2 und 3 an, die paarweise angetrieben werden und zwischen denen das Erntegut hindurchgeführt wird. Dabei ziehen die Einzugswalzen 2 und 3 das Erntegut nicht nur in die Erntemaschine 1, sondern sie verdichten den Erntegutstrom auch. Eine weitere Verdichtung des Erntegutstroms erfolgt durch die sich daran anschließenden Vorpresswalzen 12 und 13, die ebenfalls paarweise angetrieben werden. Dabei ist die untere Vorpresswalze 12 mit einer glatten Oberfläche versehen und wirkt mit einem Abstreifer 14 zusammen, der das an der glatten Oberfläche anhaftende Erntegut von dieser löst.

Der verdichtete Erntegutstrom gelangt sodann in eine mit Messern versehende Häckseltrommel 15, die mit feststehenden Gegenschneiden 16 zusammenwirkt. Das gehäckselte Erntegut wird anschließend über nicht näher dargestellte seitliche Gutleitbleche und über einen Häckselboden 17 einer Nachzerkleinerungseinrichtung 18 zugeführt. Diese Nachzerkleinerungseinrichtung 18 die auch als Corn-Cracker bezeichnet wird, dient dazu, bei der Ernte von Silomais oder Mais für eine Biogasanlage die Maiskörner derart zu beschädigen, dass diese mit in den anschließenden Gärungsprozess einbezogen werden können. Die Nachzerkleinerungseinrichtung 18 kann bei der Verarbeitung beispielsweise von Gras deaktiviert beziehungsweise ausgebaut werden.

Unmittelbar hinter der Nachzerkleinerungseinrichtung 18 befindet sich als Teil einer Fördereinrichtung 19 eine Auswurfbeschleuniger-Trommel 20, die das zerkleinerte Erntegut in einen Förderschacht 21 transportiert, wobei sich an diesen Förderschacht 21 der verstellbare Auswurfkrümmer 5a anschließt. Der Auswurfkrümmer 5a ist dabei mit Prallblechen 22, 23 und 24 versehen und weist, wie bereits im Zusammenhang mit der Figur 1 beschrieben, an seinem Ende die ebenfalls verstellbare Auswurfklappe 6 auf.

An den Einzugswalzen 2 und 3 ist eine Durchsatzmesseinrichtung 25 vorgesehen, mittels der die Menge des über die Einzugswalzen 2 und 3 eingezogenen als Halmgut ausgebildeten Erntegutes ermittelt wird. Die Durchsatzmesseinrichtung 25 ist mit einer zumindest eine Central Processing Unit (CPU) 26a und zumindest einen Speichermodul 26b umfassenden Steuerungseinrichtung 26 verbunden, an die ein Display 27 und eine Bedieneinheit 28 angeschlossen sind. Durch die Durchsatzmesseinrichtung 25 wird während des Erntevorganges fortlaufend ein Durchsatz des Erntegutes ermittelt, während die Steuerungseinrichtung 26 diese Werte auswertet und daraus ein Gewicht des Erntegutes ermittelt.

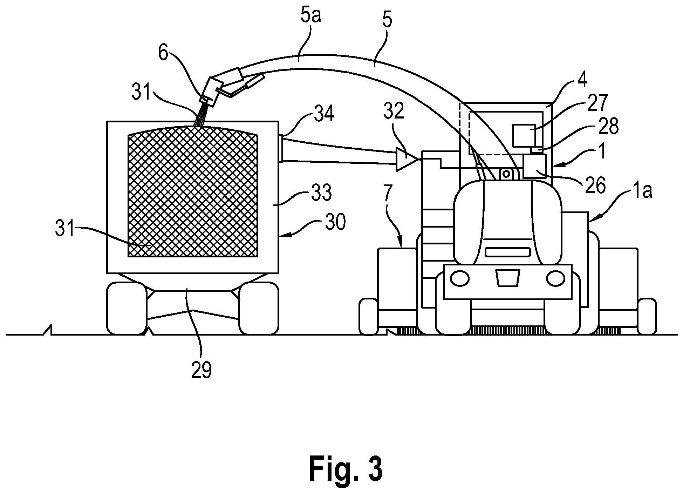

In der Figur 3 ist der selbstfahrende Feldhäcksler 1 a während eines Erntevorganges dargestellt. Neben dem Feldhäcksler 1a fährt mit im Wesentlichen gleicher Geschwindigkeit ein auf einem Fahrgestell 29 angeordneter Sammelbehälter 30, der von einem nicht näher dargestellten Traktor gezogen wird. In dem Sammelbehälter 30 hat sich eine Menge des Erntegutes 31 angesammelt und belastet das diesen aufnehmende Fahrgestell 29. Der Feldhäcksler 1 a ist in der in Figur 2 dargestellten Weise mit der Durchsatzmesseinrichtung 25 versehen, die mit der Steuerungseinrichtung 26 verbunden ist. Weiterhin befindet sich am Feldhäcksler 1a ein Lesegerät 32, das spezifische Daten des Sammelbehälters 30, wie z.B. dessen Erkennung, die maximale Zuladung usw. ermittelt. An einer Bordwand 33 ist ein Barcode 34 vorgesehen, über den das Lesegerät 32 diese Daten erfassen kann.

Nach einem Start werden dem System der neue Sammelbehälter 30 und ein Sollgewicht der Überladung zur Verfügung gestellt. Das kann, wie bereits erläutert, durch eine automatische Erkennung mittels des Lesegeräts 32 oder mittels einer Kamera, die endseitig am Auswurfkrümmer 5a angeordnet ist, geschehen. Es kann aber auch eine manuelle Eingabe des Sollgewichts mittel der Bedieneinheit 28 erfolgen. Anschließend wird vom System der Überladezähler der Steuerungseinrichtung 26 in einer Resetfunktion auf den Wert Null gesetzt. Dann startet die Messung des Durchsatzes, wobei das aus dem Durchsatz und eventuell die Gutfeuchte resultierende Gewicht des überladenen Ernteguts aufaddiert wird. Die Gewichtzunahme wird fortlaufend aktualisiert vom Display 27 angezeigt. Vor einer Überschreitung des Sollgewichts kann ein akustischer und/oder optischer Alarm ausgelöst werden.

### Bezugszeichenliste

- 1: Erntemaschine
- 1a: selbstfahrender Feldhäcksler
- 2: obere Einzugswalze
- 3: untere Einzugswalze
- 4: Fahrerkabine
- 5: Überladeeinrichtung
- 5a: Auswurfkrümmer
- 6: Auswurfklappe
- 7: Erntevorsatz
- 8: Vorrichtung zur Aufbereitung des Erntegutes
- 9: Bodenblech von 7
- 10: Gutleitblech von 7
- 11: Kufen von 7
- 12: obere Vorpresswalze
- 13: untere Vorpresswalze
- 14: Abstreifer
- 15: Häckseltrommel
- 16: Gegenschneiden von 15
- 17: Häckselboden
- 18: Nachzerkleinerungseinrichtung
- 19: Fördereinrichtung
- 20: Auswurfbeschleuniger-Trommel
- 21: Förderschacht
- 22: Prallblech
- 23: Prallblech
- 24: Prallblech
- 25: Durchsatzmesseinrichtung
- 26: Steuerungseinrichtung
- 26a: CPU (central-processing-unit)
- 26b: Speichermodul
- 27: Display
- 28: Bedieneinheit
- 29: Fahrgestell
- 30: Sammelbehälter
- 31: Erntegut
- 32: Lesegerät
- 33: Bordwand
- 34: Barcode

## Patentansprüche

1. System zur Ermittlung des Befüllgewichts eines fahrbaren Sammelbehälters (30), der zur Aufnahme eines landwirtschaftlichen Erntegutes (31) dient und von einer Erntemaschine (1) mittels einer Überladeeinrichtung (5) befüllt wird, wobei das System zumindest ein an der Erntemaschine (1) und/oder an deren Überladeeinrichtung (5) angeordnete Durchsatzmesseinrichtung (25) sowie eine Steuerungseinrichtung (26) umfasst, wobei fortlaufend Istwerte des Erntegutdurchsatzes der Steuerungseinrichtung (26) zugeführt werden, und wobei zu Beginn eines Erntezyklus bei leerem Sammelbehälter (30) spezifische Daten des Sammelbehälters (30) an die Steuerungseinrichtung (26) übertragen werden, **dadurch gekennzeichnet, dass** im Erntezyklus mittels der Steuerungseinrichtung (26) aufgrund des Erntegutdurchsatzes das aktuelle Befüllgewicht des Sammelbehälters (30) ermittelt wird, der jeweilige Sammelbehälter (30) mit einem Barcode (34) oder 2D-Code versehen ist, über den ein Wechsel des Sammelbehälters (30) sowie dessen Typ und Befüllgewicht mittels eines an der Erntemaschine (1) angeordneten Lesegeräts (32) ermittelt wird und die Gewichtzunahme fortlaufend aktualisiert von einem der Steuerungseinrichtung (26) zugeordneten Display 27 angezeigt wird und vor Überschreitung des Sollgewichts ein akustischer und/oder optischer Alarm ausgelöst wird.

2. System nach Patentanspruch 1, **dadurch gekennzeichnet, dass** die Erntemaschine (1) als selbstfahrender Feldhäcksler (1a) ausgebildet ist, welcher einen Gutstrom des Erntegutes (31) über einen als Überladeeinrichtung (5) dienenden Auswurfkrümmer (5a) auf den fahrbaren Sammelbehälter (30) fördert.

3. System nach Patentanspruch 2, **dadurch gekennzeichnet, dass** die Durchsatzmesseinrichtung (25) an Einzugswalzen (2 und 3) oder an diesen in Strömungsrichtung des Erntegutstromes nachgeordneten Vorpresswalzen (12 und 13), die jeweils paarweise gegenläufig angetrieben werden, angeordnet ist.

4. System nach Patentanspruch 3, **dadurch gekennzeichnet, dass** die Durchsatzmesseinrichtung (25) einen Sensor aufweist, mit welchem die durch den Erntegutstrom bewirkte Auslenkung zumindest einer der Walzen (2, 3, 12, 13) oder die an zumindest einer der Walzen (2, 3, 12, 13) auftretenden Kräfte ermittelt werden, und dass über die Durchsatzmesseinrichtung (25) die Drehzahl der Einzugswalzen (2, 3) und/oder Vorpresswalzen (12, 13) erfasst wird.

5. System nach Patentanspruch 1, **dadurch gekennzeichnet, dass** die Steuerungseinrichtung (26) eine Eingabeeinrichtung (28) zur manuellen Eingabe der Art des Erntegutes (31) aufweist.

6. System nach Patentanspruch 1, **dadurch gekennzeichnet, dass** die Steuerungseinrichtung (26) mit einer an der Erntemaschine (1) angeordneten Autofillkamera verbunden ist, über die selbsttätig ein Wechsel des fahrbaren Sammelbehälters (30) sowie das erlaubte Befüllgewicht des Sammelbehälters (30) ermittelbar ist.

7. System nach Patentanspruch 1, **dadurch gekennzeichnet, dass** die Erntemaschine (1) als selbstfahrender Mähdrescher ausgebildet ist, welcher einen Gutstrom des Erntegutes über eine als Überladeeinrichtung dienende Förderschnecke für eine Korntankentleerung auf den fahrbaren Sammelbehälter fördert.

8. System nach Patentanspruch 1, **dadurch gekennzeichnet, dass** die landwirtschaftliche Erntemaschine (1) als Rübenroder, Kartoffelernter, Erntemaschinen für Wurzelfrüchte oder Trauben- beziehungsweise Beerenvollernter ausgebildet ist.

9. Verfahren zur Ermittlung des Befüllgewichts eines fahrbaren Sammelbehälters (30), der zur Aufnahme eines landwirtschaftlichen Erntegutes (31) dient und mittels einer Überladeeinrichtung (5) von einem selbstfahrenden Feldhäcksler (1a) befüllt wird, **dadurch gekennzeichnet, dass** vom Fahrer des Feldhäckslers (1a) über eine Bedieneinheit (28) in eine Steuerungseinrichtung (26) die Art des Erntegutes (31) eingegeben wird, dass zu Beginn eines Erntezyklus ein Behälterwechsel und das zulässige Befüllgewicht des Sammelbehälters (30) ermittelt werden, dass während des Erntezyklus über eine an Einzugswalzen (2, 3) und/oder Vorpresswalzen (12, 13) angeordnete Messeinrichtung (25) ein Erntegutdurchsatz des Feldhäckslers (1a) ermittelt wird, wobei der Steuerungseinrichtung (26) fortlaufend Istwerte des Erntegutdurchsatzes zugeführt werden, dass aufgrund des Erntegutdurchsatzes das aktuelle Befüllgewicht des Sammelbehälters (30) ermittelt und mittels eines Displays (27) dem Fahrer des Feldhäckslers (1a) angezeigt wird und dass der Fahrer beim Überschreiten eines oberen Grenzwertes des Befüllgewichts den Überladevorgang unterbricht und/oder einen neuen Sammelbehälter (30) anfordert und der jeweilige Sammelbehälter (39) mit einem Barcode (34) oder 2D-Code versehen ist, über den ein Wechsel des Sammelbehälters (30) sowie dessen Typ und Befüllgewicht mittels eines an der Erntemaschine (1) angeordneten Lesegeräts (32) ermittelt wird und die Gewichtzunahme fortlaufend aktualisiert von einem der Steuerungseinrichtung (26) zugeordneten Display 27 angezeigt wird und vor Überschreitung des Sollgewichts ein akustischer und/oder optischer Alarm ausgelöst wird.

10. Verfahren nach Patentanspruch 9, **dadurch gekennzeichnet, dass** nach einem Abschluss des Überladevorganges oder Erreichens des oberen Grenzwertes des Befüllgewichtes die zugeführten Istwerte des Erntegutdurchsatzes auf einen Initialwert zurückgesetzt werden.

## Claims

1. A system for determining the filling weight of a mobile collecting container (30) which serves to receive an agricultural crop material (31) and is filled by a harvester (1) by means of a transloading device (5), wherein the system includes at least one throughput measuring device (25) arranged on the harvester (1) and/or the transloading device (5) thereof and a control device (26), wherein actual values of the crop material throughput are continuously fed to the control device (26), and wherein specific data of the collecting container (30) are transmitted to the control device (26) at the beginning of a harvesting cycle with the collecting container (30) empty, **characterised in that** the current filling weight of the collecting container (30) is determined in the harvesting cycle by means of the control device (26) on the basis of the crop material throughput, the respective collecting container (30) is provided with a barcode (34) or a 2D code, by way of which a change in the collecting container (30) and its type and filling weight is ascertained by means of a reading device (32) on the harvester (1) and the weight increase is displayed continuously updated by a display (27) associated with the control device (26) and an acoustic and/or optical alarm is triggered before the target weight is exceeded.

2. A system according to claim 1 **characterised in that** the harvester (1) is in the form of a self-propelled forage harvester (1a) which conveys a flow of the crop material (31) on to the mobile collecting container (30) by way of an ejection spout (5) serving as the transloading device (5).

3. A system according to claim 2 **characterised in that** the throughput measuring device (25) is arranged at feed-in rollers (2 and 3) or at pre-pressing rollers (12 and 13) which are disposed downstream thereof in the flow direction of the crop material flow, which are respectively driven pair-wise in opposite relationship.

4. A system according to claim 3 **characterised in that** the throughput measuring device (25) has a sensor with which the deflection caused by the crop material flow of at least one of the rollers (2, 3, 12, 13) or the forces occurring at at least one of the rollers (2, 3, 123, 13) are ascertained and that the speed of rotation of the feed-in rollers (2, 3) and/or the pre-pressing rollers (12, 13) is detected by way of the throughput measuring device (25).

5. A system according to claim 1 **characterised in that** the control device (26) has an input device (28) for manual input of the kind of crop material (31).

6. A system according to claim 1 **characterised in that** the control device (26) is connected to an autofill camera which is arranged on the harvester (1) and by way of which a change in the mobile collecting container (30) and the permitted filling weight of the collecting container (30) can be automatically ascertained.

7. A system according to claim 1 **characterised in that** the harvester (1) is in the form of a self-propelled combine harvester which conveys a flow of the crop material on to the mobile collecting container by way of a conveyor screw serving as the transloading device for grain tank emptying.

8. A system according to claim 1 **characterised in that** the agricultural harvester (1) is in the form of a beet lifter, a potato harvester, harvesters for root crops or grape or berry harvesters.

9. A method of determining the filling weight of a mobile collecting container (30) which serves to receive an agricultural crop material (31) and is filled by a self-propelled forage harvester (1a) by means of a transloading device (5), **characterised in that** the kind of crop material (31) is input into a control device (26) by the driver of the forage harvester (1a) by way of an operating unit (28), that a container change and the permissible filling weight of the collecting container (30) are determined at the beginning of a harvesting cycle, that during the harvesting cycle a crop material throughput of the forage harvester (1a) is ascertained by way of a measuring device (25) arranged at feed-in rollers (2, 3) and/or pre-pressing rollers (12, 13), wherein actual values of the crop material throughput are continuously fed to the control device (26), that the current filling weight of the collecting container (30) is ascertained on the basis of the crop material throughput and displayed to the driver of the forage harvester (1a) by means of a display (27) and that when an upper limit value of the filling weight is exceeded the driver interrupts the transloading operation and/or calls for a new collecting container (30), the respective collecting container (30) is provided with a barcode (34) or a 2D code, by way of which a change in the collecting container (30) and its type and filling weight is ascertained by means of a reading device (32) on the harvester (1) and the weight increase is displayed continuously updated by a display (27) associated with the control device (26) and an acoustic and/or optical alarm is triggered before the target weight is exceeded.

10. A method according to claim 9 **characterised in that** after the conclusion of the transloading operation or the attainment of the upper limit value of the filling weight the supplied actual values of the crop material throughput are reset to an initial value.

## Revendications

1. Système de détermination du poids de remplissage d'un conteneur de collecte roulant (30) qui sert à recueillir un produit de récolte agricole (31) et est rempli par une machine de récolte (1) au moyen d'un équipement de déchargement (5), le système comprenant au moins un équipement de mesure de débit (25) disposé sur la machine de récolte (1) et/ou sur son équipement de déchargement (5) ainsi qu'un équipement de commande (26), des valeurs effectives de débit de produit de récolte étant transmises en continu à l'équipement de commande (26), et des données spécifiques du conteneur de collecte (30) étant transmises à l'équipement de commande (26) au début d'un cycle de récolte quand le conteneur de collecte (30) est vide, **caractérisé en ce que** le poids de remplissage instantané du conteneur de collecte (30) est déterminé lors du cycle de récolte au moyen de l'équipement de commande (26) sur la base du débit de produit de récolte, le conteneur de collecte respectif (30) est muni d'un code-barres (34) ou d'un code 2D, lequel permet, au moyen d'un appareil de lecture (32) disposé sur la machine de récolte (1), de détecter un changement de conteneur de collecte (30) ainsi que son poids de remplissage, et l'augmentation de poids est affichée en étant actualisée en continu par un affichage 27 associé à l'équipement de commande (26) et une alarme acoustique et/ou optique est déclenchée avant le surpassement du poids de consigne.

2. Système selon la revendication 1, **caractérisé en ce que** la machine de récolte (1) est conformée en ensileuse automotrice (la), laquelle transfère au conteneur de collecte roulant (30) un flux de produit de produit récolté (31) par l'intermédiaire d'une goulotte (5a) servant d'équipement de déchargement (5).

3. Système selon la revendication 2, **caractérisé en ce que** l'équipement de mesure de débit (25) est disposé au niveau de rouleaux d'alimentation (2 et 3) ou de rouleaux de précompression (12 et 13) disposés en aval de ceux-ci dans la direction d'écoulement du flux de récolte, lesquels sont entraînés par paires dans des directions opposées.

4. Système selon la revendication 3, **caractérisé en ce que** l'équipement de mesure de débit (25) comporte un capteur permettant de déterminer la déviation d'au moins un des rouleaux (2, 3, 12, 13) provoquée par le flux de récolte ou les forces survenant au niveau d'au moins un des rouleaux (2, 3, 12, 13), et **en ce que** l'équipement de mesure de débit (25) détecte la vitesse de rotation des rouleaux d'alimentation (2, 3) et/ou des rouleaux de précompression (12, 13).

5. Système selon la revendication 1, **caractérisé en ce que** l'équipement de commande (26) comporte un équipement d'entrée (28) pour l'entrée manuelle du type de produit récolté (31).

6. Système selon la revendication 1, **caractérisé en ce que** l'équipement de commande (26) est connecté à une caméra Autofill qui est disposée sur la machine de récolte (1) et qui permet de détecter automatiquement un changement de conteneur de collecte roulant (30) ainsi que le poids de remplissage autorisé du conteneur de collecte (30) .

7. Système selon la revendication 1, **caractérisé en ce que** la machine de récolte (1) est conformée en moissonneuse-batteuse automotrice, laquelle transfère un flux de produit du produit récolté au conteneur de collecte roulant par l'intermédiaire d'une vis d'amenée servant d'équipement de déchargement pour vider la trémie.

8. Système selon la revendication 1, **caractérisé en ce que** la machine agricole de récolte (1) est conformée en arracheuse de betteraves, en récolteuse de pommes de terre, en récolteuse de racines fourragères ou en machine à vendanger, respectivement en récolteuse de baies.

9. Procédé de détermination du poids de remplissage d'un conteneur de collecte roulant (30) qui sert à collecter un produit de récolte agricole (31) et est rempli par une ensileuse automotrice (1a) au moyen d'un équipement de déchargement (5), **caractérisé en ce que**, par l'intermédiaire d'une unité d'utilisation (28), le type de produit récolté (31) est entré par le conducteur de l'ensileuse (1a) dans un équipement de commande (26), **en ce que**, au début d'un cycle de récolte, un changement de conteneur et le poids de remplissage autorisé du conteneur de collecte (30) sont détectés, **en ce que**, pendant le cycle de récolte, un débit de produit de récolte de l'ensileuse (1a) est déterminé par l'intermédiaire d'un dispositif de mesure (25) disposé au niveau de rouleaux d'alimentation (2, 3) et/ou de rouleaux de précompression (12, 13), des valeurs effectives du débit de produit de récolte étant transmises en continu à l'équipement de commande (26), **en ce que** le poids de remplissage instantané du conteneur de collecte (30) est déterminé sur la base du débit de produit de récolte et est indiqué au conducteur de l'ensileuse (1a) au moyen d'un affichage (27), et **en ce que**, en cas de dépassement d'une valeur limite supérieure du poids de remplissage, le conducteur interrompt l'opération de déchargement et/ou demande un nouveau conteneur de collecte (30), le conteneur de collecte respectif (30) est muni d'un code-barres (34) ou d'un code 2D, lequel permet, au moyen d'un appareil de lecture (32) disposé sur la machine de récolte (1), de détecter un changement de conteneur de collecte (30) ainsi que son poids de remplissage, et l'augmentation de poids est affichée en étant actualisée en continu par un affichage 27 associé à l'équipement de commande (26) et une alarme acoustique et/ou optique est déclenchée avant le surpassement du poids de consigne.

10. Procédé selon la revendication 9, **caractérisé en ce que**, au terme de l'opération de déchargement ou à l'atteinte de la valeur limite supérieure du poids de remplissage, les valeurs effectives transmises de débit de produit de récolte sont ramenées à une valeur initiale.
